(19) Europäisches Patentamt / European Patent Office / Office européen des brevets

(11) **EP 2 134 452 B1**

(12) **FASCICULE DE BREVET EUROPEEN**

(45) Date de publication et mention
de la délivrance du brevet:
**17.05.2017 Bulletin 2017/20**

(21) Numéro de dépôt: **08717211.0**

(22) Date de dépôt: **28.02.2008**

(51) Int Cl.:
*B01D 53/94* $^{(2006.01)}$    *B01J 13/00* $^{(2006.01)}$
*C10L 1/12* $^{(2006.01)}$    *C10L 10/06* $^{(2006.01)}$
*F01N 3/08* $^{(2006.01)}$    *F01N 3/20* $^{(2006.01)}$
*C10L 1/14* $^{(2006.01)}$    *C10L 1/16* $^{(2006.01)}$
*C10L 1/188* $^{(2006.01)}$    *C10L 1/198* $^{(2006.01)}$
*C10L 1/24* $^{(2006.01)}$    *C10L 1/26* $^{(2006.01)}$
*C10L 10/02* $^{(2006.01)}$    *F02B 3/06* $^{(2006.01)}$
*F02M 25/00* $^{(2006.01)}$    *F01N 3/023* $^{(2006.01)}$
*F01N 3/029* $^{(2006.01)}$

(86) Numéro de dépôt international:
**PCT/EP2008/052415**

(87) Numéro de publication internationale:
**WO 2008/107364 (12.09.2008 Gazette 2008/37)**

(54) **PROCEDE DE FONCTIONNEMENT D'UN MOTEUR DIESEL EN VUE DE FACILITER LA REGENERATION D'UN FILTRE A PARTICULES SUR LA LIGNE D'ECHAPPEMENT**

VERFAHREN ZUM BETRIEB EINES DIESELMOTORS ZWECKS ERLEICHTERUNG DER REGENERATION EINES PARTIKELFILTERS IM ABGASSYSTEM

METHOD OF OPERATING A DIESEL ENGINE WITH A VIEW TO MAKING IT EASIER TO REGENERATE A PARTICLE FILTER IN THE EXHAUST SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.03.2007 FR 0701619**

(43) Date de publication de la demande:
**23.12.2009 Bulletin 2009/52**

(73) Titulaire: **Rhodia Opérations
93306 Aubervilliers (FR)**

(72) Inventeurs:
• **HARLE, Virginie
F-60300 Senlis (FR)**
• **ROCHER, Laurent
38150 Vernioz (FR)**

(74) Mandataire: **Senninger, Thierry et al
Rhodia Operations
Département Brevets
Bureau 0.121
40, rue de la Haie Coq
93306 Aubervilliers Cedex (FR)**

(56) Documents cités:
EP-A- 1 411 108    EP-A- 1 493 484
WO-A-00/34632    WO-A-97/19022
WO-A-2006/078761    WO-A-2007/085561
FR-A- 2 797 199    FR-A- 2 833 862

• HINOT ET AL: "The effect of the contact between platinum and soot particles on the catalytic oxidation of soot deposits on a diesel particle filter" APPLIED CATALYSIS B: ENVIRONMENTAL, ELSEVIER, vol. 71, no. 3-4, 23 janvier 2007 (2007-01-23), pages 271-278, XP005856285 ISSN: 0926-3373
• NEEFT ET AL: "Catalysts for the oxidation of soot from diesel exhaust gases II. Contact between soot and catalyst under practical conditions" APPLIED CATALYSIS B: ENVIRONMENTAL, ELSEVIER, vol. 12, no. 1, 16 mai 1997 (1997-05-16), pages 21-31, XP022228181 ISSN: 0926-3373
• B.A.A.L. VAN SETTEN, J.M. SCHOUTEN, M. MAKKEE, J.A. MOULIJN: "REALISTIC CONTACT FOR SOOT WITH AN OXIDATION CATALYST FOR LABORATORY STUDIES" APPLIED CATALYSIS B:ENVIRONMENTAL, vol. 28, 2000, pages 253-257, XP002461464

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Remarques:
Le dossier contient des informations techniques présentées postérieurement au dépôt de la demande et ne figurant pas dans le présent fascicule.

Remarques:
Le dossier contient des informations techniques présentées postérieurement au dépôt de la demande et ne figurant pas dans le présent fascicule.

**Description**

La présente invention concerne un procédé de fonctionnement d'un moteur diesel ou d'un moteur fonctionnant en mélange pauvre en vue de faciliter la régénération du filtre à particules monté sur la ligne d'échappement dont est équipé ce moteur.

On sait que lors de la combustion du gazole dans le moteur diesel, les produits carbonés ont tendance à former des suies, qui sont réputées nocives tant pour l'environnement que pour la santé. On recherche depuis longtemps des techniques qui permettent de réduire l'émission de ces particules carbonées, qu'on désignera dans la suite de la description sous l'expression de "suies".

La technique la plus couramment retenue pour cela consiste à adapter dans les circuits d'échappement un filtre à particules (FAP) susceptible d'arrêter la totalité ou une très forte proportion des suies engendrées par la combustion des divers combustibles.

Cependant, en s'accumulant progressivement dans les filtres, les suies provoquent dans un premier temps, une augmentation de perte de charge et, dans un second temps, un début d'obturation qui conduit à une perte de performance du moteur. Il est alors nécessaire de brûler les suies collectées par ces filtres. Cette opération, qui est appelée « régénération du filtre », doit être faite régulièrement.

Il faut noter que la température à laquelle peut se produire la combustion des suies (environ 650°C) est plus élevée que celle des gaz d'échappement ce qui implique, de ce fait, pour effectuer cette régénération la mise en oeuvre de techniques qui permettent d'atteindre cette température ou encore de l'abaisser.

On peut ainsi introduire dans les suies et par l'intermédiaire notamment d'additifs dans le carburant, des catalyseurs qui permettent une auto-inflammation de celles-ci à des températures inférieures à 500°C.

On peut par ailleurs réaliser la régénération en effectuant périodiquement une post-injection de carburant dans les cylindres du moteur lors de leur phase de détente. Cette post-injection a pour effet d'augmenter la température des gaz d'échappement et la quantité d'hydrocarbures contenus dans ceux-ci. Ces hydrocarbures sont convertis sur un catalyseur d'oxydation placé en amont du FAP par une réaction exothermique qui porte alors les gaz d'échappement à une température suffisante pour provoquer la combustion des suies lorsque ces gaz arrivent sur le lit de suies du EP 1 493 484 divulgue un procédé de fonctionnement d'un moteur diesel avec filtre à particules catalysé. On comprend qu'il est intéressant de pouvoir diminuer la périodicité et la durée de ces régénérations et aussi de pouvoir les faire à une température plus faible. Ceci entraîne en effet, d'une part, une diminution de la consommation du véhicule par suite de la plus faible quantité de carburant consommée pour la post-injection et, d'autre part, cela permet d'utiliser pour les FAP des matériaux qui n'ont pas besoin de présenter une résistance thermique aussi élevée par exemple que le carbure de silicium et donc des matériaux moins couteux.

L'objet de l'invention est la mise au point d'un procédé de fonctionnement des moteurs diesel ou fonctionnant en mélange pauvre permettant de répondre à ce besoin.

Dans ce but, le procédé de l'invention est un procédé de fonctionnement d'un moteur diesel ou d'un moteur fonctionnant en mélange pauvre qui est équipé d'une ligne d'échappement sur laquelle est monté un filtre à particules et ce procédé est défini dans la revendication 1. Le procédé de l'invention permet d'augmenter la cinétique de combustion des suies et ceci notamment à basse température, par exemple à une température inférieure à 450°C. Dans certaines conditions de roulage pour lesquelles les gaz d'échappement présentent une température d'au moins 240°C, le procédé de l'invention permet de brûler en continu les suies, de ralentir ainsi le chargement du FAP et par conséquent de diminuer la périodicité des régénérations.

D'autres caractéristiques, détails et avantages de l'invention apparaîtront encore plus complètement à la lecture de la description qui va suivre, ainsi que des divers exemples concrets mais non limitatifs destinés à l'illustrer.

L'invention s'applique aux moteurs diesel ou aux moteurs à essence fonctionnant en mélange pauvre (rapport combustible/comburant, appelé également richesse, inférieur au rapport stoechiométrique). Ces moteurs sont équipés d'une manière connue d'une ligne ou pot d'échappement dans lequel est intégré un FAP. Classiquement, il s'agit d'un filtre de type à paroi filtrante en céramique, par exemple en cordiérite, ou en carbure de silicium à travers lequel circulent les gaz d'échappement. Toutefois il peut également s'agir d'un ou plusieurs tamis en toile métallique ou encore d'un filtre de type mousse en céramique ou en matériau fibreux.

Selon une première caractéristique du procédé de l'invention, on alimente le moteur avec un carburant qui comprend un catalyseur destiné à abaisser la température de combustion des suies retenues par le FAP. Il s'agit là en fait d'une technique connue, qui a été évoquée plus haut, dite « Fuel Borne Catalysis » ou FBC dans laquelle on incorpore au carburant un additif catalytique qui, après la combustion du carburant dans le moteur, se retrouve incorporé dans les suies et qui va permettre de déclencher la combustion de celles-ci à une température plus basse que celle à laquelle les suies brûlent normalement.

Dans le cas de la présente invention, cet additif présent dans le carburant est constitué essentiellement soit d'un composé du fer soit d'un composé du fer en combinaison avec un composé du cérium. Par « constitué essentiellement » on entend que l'additif ne contient pas d'autre composé à action catalytique que le composé du fer ou les composés du fer et du cérium. Cet additif peut ainsi contenir d'autres composés mais dans ce cas, ces composés n'ont pas de fonction catalytique, ils ne contribuent pas à l'abaissement de la température de combustion de suies.

Comme composés du fer on peut citer à titre d'exemple les composés du type ferrocène, les acétylacétonates ferreux et ferrique, le naphténate de fer, l'oléate de fer, l'octoate de fer, le stéarate de fer, le néodécanoate de fer, les alcényl et alkyl succinates de fer et plus généralement les sels de fer des acides carboxyliques en C6-C24.

Comme composé du cérium on peut citer de même et à titre d'exemple les acétylacétonates de cérium, le naphténate de cérium, l'oléate de cérium, l'octoate de cérium, le stéarate de cérium, le néodécanoate de cérium, les alcényl et alkyl succinates de cérium et plus généralement les sels de cérium des acides carboxyliques en C6-C24.

Cet additif peut se présenter sous la forme d'une solution aqueuse ou organique d'un composé du fer ou du cérium.

Cet additif se présente sous la forme d'une dispersion colloïdale organique d'un composé du fer ou du cérium. Ce composé du fer ou du cérium est un oxyde et/ou un hydroxyde et/ou un oxyhydroxyde de fer ou de cérium.

L'expression « dispersion colloïdale» désigne dans la présente description tout système constitué de fines particules solides de dimensions colloïdales à base d'un composé du fer ou du cérium, en suspension stable dans une phase liquide, lesdites particules pouvant, en outre, éventuellement contenir des quantités résiduelles d'ions liés ou adsorbés tels que par exemple des nitrates, des acétates, des citrates ou des ammoniums. Par dimensions colloïdales, on entend des dimensions comprises entre environ 1 nm et environ 500 nm. Les particules peuvent plus particulièrement présenter une taille moyenne d'au plus 250 nm environ, notamment d'au plus 100 nm, de préférence d'au plus 20 nm et encore plus préférentiellement d'au plus 15 nm. On notera que dans de telles dispersions, le composé du fer ou du cérium peut se trouver soit, de préférence, totalement sous la forme de colloïdes, soit sous la forme de colloïdes et partiellement sous la forme d'ions.

La granulométrie dont il est fait état ci-dessus et pour la suite de la description, sauf indication contraire, est déterminée par microscopie électronique à transmission (MET), de manière classique, sur un échantillon préalablement séché et déposé sur une membrane de carbone supportée sur une grille de cuivre.

On notera ici que pour le mode de réalisation de l'invention dans lequel on utilise un composé du fer en combinaison avec un composé du cérium, il peut s'agir tout d'abord d'un mélange de ces composés, par exemple un sel de fer en mélange avec un sel de cérium ou encore une dispersion colloïdale qui comprend des colloïdes du composé du fer et des colloïdes du composé du cérium. Il peut aussi s'agir de composés du type mixtes, c'est à dire des composés dans lesquels le fer et le cérium sont présents ensemble dans la même espèce chimique. Il peut s'agir par exemple de sels mixtes de fer et de cérium ou de dispersions colloïdales dans lesquelles les colloïdes sont des oxydes mixtes de fer et de cérium.

Toujours dans le cas du mode de réalisation utilisant un composé du fer en combinaison avec un composé du cérium, la proportion du fer et du cérium peut varier dans un rapport allant de 0/100 à 80/20, ce rapport étant un rapport molaire en élément Ce par rapport à l'élément Fe. Ce rapport peut être plus particulièrement compris entre 10/90 et 50/50.

Selon un mode de réalisation particulier de l'invention, le procédé est mis en oeuvre avec un additif qui n'est constitué essentiellement que d'un composé du fer.

Selon un autre mode de réalisation particulier de l'invention, la dispersion colloïdale est une dispersion qui comprend une phase organique; des particules d'un composé du fer sous forme amorphe et au moins un agent amphiphile.

Une telle dispersion est décrite dans la demande de brevet WO 03/053560 A1 à l'enseignement de laquelle on pourra se reporter et dont on reprend ci-dessous les caractéristiques essentielles.

Les particules de cette dispersion sont à base d'un composé du fer qui, de préférence, peut être amorphe. Ce caractère amorphe peut être mis en évidence par analyse RX, les diagrammes RX obtenus ne montrent en effet dans ce cas aucun pic significatif.

Le composé du fer est un oxyde et/ou un hydroxyde et/ou un oxyhydroxyde de fer. Le fer est généralement présent essentiellement à l'état d'oxydation 3.

Selon une variante, au moins 85%, plus particulièrement au moins 90% et encore plus particulièrement au moins 95% des particules sont des particules primaires. On entend par particule primaire une particule qui est parfaitement individualisée et qui n'est pas agrégée avec une autre ou plusieurs autres particules. Cette caractéristique peut être mise en évidence en examinant la dispersion par MET.

Par ailleurs et selon une variante avantageuse, les particules de cette dispersion colloïdale peuvent présenter une granulométrie fine c'est à dire un $d_{50}$ compris entre 1 nm et 5 nm, plus particulièrement entre 3 nm et 4 nm.

Comme indiqué plus haut, les particules de la dispersion colloïdale sont en suspension dans une phase organique qui peut être choisie parmi les hydrocarbures aliphatiques, les hydrocarbures chlorés ou leur mélange.

Le composé amphiphile peut être un acide carboxylique qui comporte généralement de 10 à 50 atomes de carbone, de préférence de 15 à 25 atomes de carbone et ce peut être un acide linéaire ou ramifié. Il peut être choisi parmi les acides aryliques, aliphatiques ou arylaliphatiques.

A titre d'exemple, on peut citer les acides gras de tallol, d'huile de soja, de suif, d'huile de lin, l'acide oléique, l'acide linoléique, l'acide stéarique et ses isomères, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène sulfonique, l'acide toluène phosphonique, l'acide lauryl sulfonique, l'acide lauryl phosphonique, l'acide palmityl sulfonique, et l'acide palmityl phosphonique.

Le composé amphiphile peut également être choisi parmi les alkyl éthers phosphates polyoxyéthylénés ou encore les phosphates de dialcoyle polyoxyéthylénés ou les alkyl éther carboxylates polyoxyéthylénés.

Comme dispersion colloïdale du cérium utilisable dans le cadre de la présente invention, on peut citer celle décrite dans EP-A-671205. Cette dispersion comporte des particules d'oxyde de cérium, un composé acide amphiphile et une phase organique, du type de ceux décrits ci-dessus, et elle est caractérisée par le fait que les particules ont un $d_{90}$ au plus égal à 200 nanomètres. La dispersion présente en outre au moins une des caractéristiques suivantes: (i) les particules d'oxyde de cérium sont sous forme d'agglomérats de cristallites dont le $d_{80}$, avantageusement le $d_{90}$, mesuré par comptage photométrique (microscopie électronique par transmission a haute résolution) est au plus égal à 5 nanomètres, quatre-vingt-dix pour cent (en masse) des agglomérats comportant de 1 à 5, de préférence de 1 à 3 cristallites, (ii) le composé acide amphiphile comporte au moins un acide de 11 à 50 atomes de carbone, présentant au moins une ramification en alpha, beta, gamma ou delta de l'atome porteur de l'hydrogène acide.

On peut aussi se référer à l'enseignement de WO 97/19022 qui décrit des dispersions colloïdales de cérium qui peuvent être utilisées ici en combinaison avec un dispersion colloïdale de fer mais qui décrit aussi des dispersions colloïdales d'un composé mixte de fer et de cérium qui peuvent donc être utilisées telles quelles aussi pour l'invention. Les dispersions décrites dans WO 97/19022 comportent des particules d'un composé de cérium et/ou de fer, un composé acide amphiphile et une phase organique comme décrits ci-dessus, et elles sont caractérisées par le fait que les particules sont obtenues par un procédé comportant les étapes ci-après : a) on prépare une solution comprenant au moins un sel soluble, le plus souvent un acétate et/ou un chlorure, de cérium; b) on met en contact la solution avec un milieu basique et on maintient le mélange réactionnel ainsi formé à un pH basique; c) on récupère le précipité formé par atomisation ou lyophilisation.

On peut encore mentionner comme dispersions colloïdales de cérium utilisables ici en combinaison avec une dispersion colloïdale de fer mais aussi comme dispersions colloïdales d'un composé mixte de fer et de cérium utilisables telles quelles dans l'invention celles décrites dans WO 01/10545. Ces dispersion colloïdale organique comportent des particules d'un composé du cérium et, éventuellement, d'un composé du fer dans une proportion en cérium qui est de préférence d'au moins 10 %, plus particulièrement d'au moins 20 %, et encore plus particulièrement d'au moins 50 %, en mole par rapport au nombre de mole total d'éléments Fe + Ce exprimés en oxyde. Ces dispersions comportent au moins un acide de préférence amphiphile et au moins un diluant, de préférence apolaire, ceux-ci étant du type décrit plus haut. Ces dispersions sont telles qu'au moins 90 % des particules sont monocristallines. Les particules peuvent présenter en outre un $d_{50}$ compris entre 1 et 5 nm, de préférence entre 2 et 3 nm.

L'additif peut être contenu dans un réservoir auxiliaire et ajouté par des moyens connus au carburant dans la quantité nécessaire. Cette quantité, exprimée en masse d'élément métallique fer par rapport à la masse de carburant peut par exemple être comprise entre 0,5 ppm et 25 ppm, plus particulièrement entre 2 ppm et 15 ppm et encore plus particulièrement entre 2 ppm et 10 ppm.

Selon une seconde caractéristique du procédé de l'invention, on fait passer les gaz d'échappement issus du moteur dans un FAP catalysé.

Le catalyseur de ce filtre consiste en un catalyseur d'aide à la combustion des particules de suies. Par « consiste en » on entend que le catalyseur n'a pas d'autre fonction que l'aide à la combustion des suies et que le FAP ne contient pas d'autre catalyseur.

Cette aide à la combustion des suies peut être directe dans la mesure où le catalyseur peut promouvoir cette combustion en abaissant la température de combustion ou indirecte dans la mesure où le catalyseur contribue à la propagation d'une température élevée depuis la zone de démarrage de la combustion des suies jusqu'à l'ensemble du lit de suies disposé sur le FAP.

Ce catalyseur du FAP peut être un catalyseur à base d'au moins un métal choisi parmi le platine ou les métaux du groupe du platine, comme par exemple le palladium. Des combinaisons du platine avec ces métaux ou encore de ces métaux entre eux sont bien entendu possibles.

Le métal du catalyseur peut être incorporé dans le filtre ou déposé sur celui-ci d'une manière connue. Il peut être par exemple inclus dans un revêtement (washcoat) lui-même disposé sur le filtre. Ce revêtement peut être choisis parmi l'alumine, l'oxyde de titane, la silice, les spinelles, les zéolites, les silicates, les phosphates d'aluminium cristallins ou leurs mélanges. L'alumine peut être tout particulièrement utilisée.

Dans la mesure où le catalyseur du FAP est un catalyseur d'aide à la combustion des suies, il est de ce fait présent sur le filtre dans une quantité relativement faible, c'est-à-dire en générale dans une quantité d'au plus 70 g/pied$^3$ (2,5 g/dm$^3$). Cette quantité est exprimée en masse d'élément métal, par exemple en masse de platine, par rapport au volume du FAP. Cette quantité peut être plus particulièrement d'au plus 60 g/pied$^3$ (2,1 g/dm$^3$) et encore plus particulièrement d'au plus 50 g/pied$^3$ (1,8 g/dm$^3$). Elle peut être par exemple comprise entre 20 g/pied$^3$ (0,7 g/dm$^3$) et 50

g/pied$^3$, notamment entre 20 et 40 g/pied$^3$ (1,4 g/dm$^3$).

Selon une variante de l'invention il est possible de faire passer les gaz d'échappement sur un catalyseur d'oxydation diesel disposé en amont (par rapport au sens d'écoulement des gaz) du FAP. Un tel catalyseur a pour fonction de convertir les hydrocarbures et le CO contenus dans les gaz en $CO_2$ et vapeur d'eau. Les catalyseurs susceptibles de remplir cette fonction sont connus, ils sont généralement à base de platine, palladium, rhodium et de leurs mélanges, ces métaux étant déposés sur des supports de type alumine, titane, silice, sous une forme pure ou dopée.

Comme le procédé de l'invention peut fonctionner à basse température, il est possible de le mettre en oeuvre sur un moteur équipé d'une ligne d'échappement comportant un système de réduction des oxydes d'azote (NOx) de type DeNOx. Selon une première variante, ce système peut comporter des moyens de réduction sélective des oxydes d'azote par exemple par traitement à l'ammoniaque. Dans ce cas le système comporte un catalyseur par exemple du type à base de vanadium sur un support de type oxyde de titane ou encore à base d'un métal du type fer ou cuivre dans une zéolite. Selon une seconde variante, ce système peut comporter des pièges à NOx qui stockent les NOx en milieu pauvre et qui les réduisent en milieu riche. Ces pièges à NOx sont par exemple des compositions à base de baryum et de platine sur un support en alumine. Ce système peut être positionné en amont du FAP et proche du moteur pour bénéficier des gaz les plus chauds sur le catalyseur DeNOx (système close-copled) ou encore en aval du FAP car la température des gaz sortant du FAP, notamment pendant la régénération, est plus faible que dans les systèmes de l'art antérieur.

Des exemples vont maintenant être donnés.

EXEMPLE 1

Cet exemple concerne des résultats obtenus sur un véhicule de tourisme équipé d'un moteur Diesel Turbo à injection direct (TDI), 5 cylindres de 2460 cm$^3$, développant une puissance maximale de 128 kW et un couple maximal de 400 Nm.

La ligne d'échappement du véhicule comporte un catalyseur d'oxydation diesel, composé d'un monolithe de 1,2 litre en cordiérite contenant du platine (110 g/pied$^3$ (3,9 g/dm$^3$)) et un washcoat à base d'alumine. Un FAP en carbure de silicium (200 cpsi) de 2,9 litres est monté en aval du catalyseur d'oxydation diesel dans la ligne d'échappement. Ce FAP comporte sur ses parois filtrantes un washcoat contenant du platine à hauteur de 40 g/pied$^3$ (1,4 g/dm$^3$) ainsi que de l'alumine pour assurer la dispersion du Pt et son adhésion au filtre.

On effectue des essais en faisant réaliser au véhicule un cycle de roulage dit « urbain » au cours duquel la vitesse du moteur est limitée à 1500 tpm ce qui conduit à une température moyenne des gaz en entrée du FAP de 240°C. Le cycle de roulage, d'une durée totale de 44 minutes, est tel que la température des gaz d'échappement en entrée du FAP n'atteint une valeur supérieure ou égale à 300°C que pendant 8% du temps. Le cycle de roulage est reproduit 15 fois, ce qui représente onze heures de roulage, pour atteindre une certaine perte de charge sur le FAP exprimée en pourcentage de la perte de charge maximale acceptable pour le fonctionnement du système.

On effectue un essai en utilisant un carburant gazole ne comprenant pas d'additif (FBC) pour la catalyse de combustion de suies et un autre dans lequel le carburant gazole contient à titre de FBC une dispersion colloïdale de fer dans une quantité de 7 ppm en masse de fer métal. Cette dispersion contient 10% en masse de fer métal, de l'acide isostéarique dans de l'Isopar L et a été préparée selon l'enseignement de WO 03/053560.

On donne dans le tableau 1 ci-dessous les % de chargement du FAP, le 100% correspondant à la perte de charge maximale compatible avec le fonctionnement du système.

Tableau 1

| | FAP catalysé et carburant additivé de FBC (invention) | FAP catalysé et carburant sans FBC (comparatif) |
|---|---|---|
| % de chargement du FAP au bout de 11 heures de roulage | 22 % | 45 % |

On voit que dans des conditions défavorables, c'est-à-dire dans un cycle urbain pendant lequel la température des gaz d'échappement reste basse, le procédé de l'invention permet de ralentir l'accumulation des suies dans le filtre d'environ 50% et donc de reculer l'opération de régénération du filtre. L'augmentation de la cinétique de combustion de suies due au procédé de l'invention a permis en effet pendant les courtes périodes du cycle où la température des gaz est la plus élevée de brûler une quantité de suies bien supérieure à celle brûlée dans le cas du procédé comparatif.

EXEMPLE 2

Cet exemple donne des résultats d'essais effectués avec le même moteur que dans l'exemple 1 mais monté sur un banc moteur de façon à mesurer le point d'équilibre (balance point) défini comme la température à laquelle le système permet de brûler des suies à une vitesse identique à celle de la production des suies par le moteur. Cet équilibre est déterminé par la température qu'il faut appliquer en entrée du FAP pour atteindre une stabilisation de la perte de charge de celui-ci.

La ligne d'échappement du système est dans ce cas uniquement constituée du FAP décrit dans l'exemple 1. Deux essais sont réalisés avec ce filtre catalysé : un premier essai avec le carburant gazole sans FBC et un second essai avec un carburant additivé de FBC c'est-à-dire de 5 ppm en masse de fer métal provenant de la même dispersion colloïdale que celle de l'exemple 1. Un troisième essai est réalisé en utilisant le même carburant additivé de FBC (5 ppm en masse de fer métal avec la même dispersion) mais avec un FAP en carbure de silicium ne contenant pas de matériau catalytique.

Pour mesurer le balance point on procède de la façon suivante : les filtres sont chargés pendant environ 8 heures de façon à atteindre une contre pression de 94 mbar sur les trois systèmes correspondant à 16 g de suies. Le chargement est réalisé en appliquant une vitesse de rotation moteur de 3000 tours/minute, un couple de 40 Nm ce qui correspond à une température en entrée du filtre de 200°C.

Une fois le filtre chargé, la vitesse de rotation du moteur est réduite à 2000 tours/min puis le couple est progressivement augmenté à partir de 45 Nm toutes les 15 minutes jusqu'à atteindre un équilibre de la perte de charge sur le filtre (balance point).

Le tableau 2 donne les températures de balance point mesurées pour les trois essais.

Tableau 2

|  | FAP catalysé et carburant additivé de FBC (invention) | FAP catalysé et carburant sans FBC (comparatif) | FAP non catalysé et carburant additivé de FBC (comparatif) |
|---|---|---|---|
| Couple moteur (Nm) | 91 | 125 | 97 |
| Balance point (°C) | 340°C | 410°C | 355°C |

On constate que le procédé de l'invention donne un balance point à plus basse température ce qui traduit une meilleure efficacité pour la combustion des suies à basse température.

EXEMPLE 3

Cet exemple donne des résultats de mesure de la cinétique de régénération des suies à une température d'entrée du FAP fixée.

Deux essais sont réalisés avec le filtre catalysé dont le premier avec le carburant gazole non additivé de FBC et le second avec un carburant additivé de FBC, c'est à dire de 5 ppm en masse de fer métal provenant de la même dispersion colloïdale que celle de l'exemple 1. Un troisième essai est réalisé en utilisant le même carburant additivé de 5 ppm poids métal de fer avec la même dispersion colloïdale mais avec un filtre en carbure de silicium ne contenant pas de matériau catalytique.

Pour mesurer la cinétique de combustion, on procède de la façon suivante : les filtres sont chargés pendant environ 8 heures de façon à atteindre une contre pression de 94 mbar sur les trois systèmes correspondant à 16 g de suies. Le chargement est réalisé en appliquant une vitesse de rotation moteur de 3000 tours/minute, un couple de 40 Nm ce qui correspond à une température en entrée du filtre de 200°C. Le FAP est démonté et pesé avant et après l'étape de chargement en suies de façon à mesurer la quantité de suies présente dans le filtre avant la régénération. La différence de masse du filtre avant et après chargement donne la masse de suies accumulées pendant la phase de chargement.

Une fois le filtre chargé, la vitesse de rotation du moteur est réduite à 2000 tours/min puis le couple est fixé à 170 Nm pour atteindre une température en entrée du FAP de 425°C. Ces conditions sont maintenues pendant 1 heure puis le FAP est démonté et pesé de nouveau pour évaluer le taux de suie brûlé pendant la régénération à 425°C. La masse de suies en fin de régénération (donc non brûlées) correspond à la différence de masse du filtre entre ce qui est mesuré en fin de régénération et la masse du filtre en début d'essai, avant le chargement.

Le taux de suies brûlées pendant la régénération, calculé entre le début et la fin de la régénération, est exprimé en % de combustion des suies par l'expression suivante :

$$\% \text{ combustion des suies} = (\text{masse de suies accumulées pendant le chargement} - \text{masse de suies en fin de régénération}) / \text{masse de suies accumulées pendant le chargement X 100}$$

Le tableau 3 donne ces valeurs pour les 3 essais.

Tableau 3

| | FAP catalysé et carburant additivé de FBC (invention) | FAP catalysé et carburant sans FBC (comparatif) | FAP non catalysé et carburant additivé de FBC (comparatif) |
|---|---|---|---|
| % masse de suies brûlées à 425°C à l'entrée du filtre | 50 | 8 | 30 |

On voit donc que le procédé de l'invention permet d'obtenir une cinétique de combustion de suies améliorée par rapport aux procédés comparatifs puisque le taux de suies brûlées dans les conditions de l'invention est de 50% alors qu'il n'est que de 8% dans le cas du même filtre mais sans additif dans le carburant et qu'il est de 30% dans le cas de l'utilisation d'un carburant avec additif mais avec un filtre non catalysé.

## Revendications

1. Procédé de fonctionnement d'un moteur diesel ou d'un moteur fonctionnant en mélange pauvre équipé d'une ligne d'échappement sur laquelle est monté un filtre à particules, **caractérisé en ce qu'**on alimente le moteur avec un carburant comprenant un additif capable d'abaisser la température de combustion des particules de suies retenues par le filtre à particules et constitué essentiellement d'un composé du fer ou essentiellement d'un composé du fer et d'un composé du cérium, cet additif étant sous forme d'une dispersion colloïdale organique dans laquelle le composé du fer ou le composé du cérium est un oxyde, un hydroxyde ou un oxyhydroxyde de fer ou du cérium, et **en ce qu'**on utilise comme filtre à particules, à travers lequel on fait passer les gaz d'échappement produits par la combustion du carburant dans le moteur, un filtre catalysé dont le catalyseur consiste en un catalyseur d'aide à la combustion des particules de suies.

2. Procédé selon la revendication 1, **caractérisé en ce qu'**on utilise une dispersion colloïdale qui comprend une phase organique; des particules d'un composé du fer sous forme amorphe et au moins un agent amphiphile.

3. Procédé selon la revendication 2, **caractérisé en ce qu'**on utilise une dispersion colloïdale dont au moins 85%, plus particulièrement au moins 90% et encore plus particulièrement au moins 95% des particules sont des particules primaires.

4. Procédé selon la revendication 2, **caractérisé en ce qu'**on utilise une dispersion colloïdale dont les particules présentent un d50 compris entre 1 nm et 5 nm, plus particulièrement entre 3 nm et 4 nm.

5. Procédé selon l'une des revendications précédentes, **caractérisé en ce que** la proportion du fer et du cérium dans l'additif du carburant est comprise dans un rapport allant de 0/100 à 80/20, ce rapport étant un rapport molaire en élément Ce par rapport à l'élément Fe, plus particulièrement entre 10/90 et 50/50.

6. Procédé selon l'une des revendications précédentes, **caractérisé en ce que** le catalyseur du filtre à particules est un catalyseur à base d'au moins un métal choisi parmi le platine ou les métaux du groupe du platine, ledit métal étant inclus dans un revêtement (washcoat) disposé sur le filtre et dans une quantité d'au plus 70 g/pied$^3$ (2,5 g/dm$^3$).

7. Procédé selon la revendication 6, **caractérisé en ce que** la quantité de catalyseur est d'au plus 50 g/pied$^3$ (1,8 g/dm$^3$).

**8.** Procédé selon l'une des revendications précédentes, **caractérisé en ce qu'**on fait passer les gaz d'échappement sur un catalyseur d'oxydation diesel disposé en amont du filtre à particules.

**9.** Procédé selon l'une des revendications précédentes, **caractérisé en ce que** le moteur est équipé d'une ligne d'échappement comportant un système de réduction des oxydes d'azote.

**Patentansprüche**

**1.** VERFAHREN ZUM BETRIEB EINES DIESELMOTORS ODER EINES MOTORS, WELCHER MIT MAGEREM GEMISCH ARBEITET, WELCHER MIT EINER AUSPUFFANLAGE AUSGERÜSTET IST, IN WELCHER EIN PARTIKELFILTER MONTIERT IST, **DADURCH GEKENNZEICHNET, DASS** DER MOTOR MIT EINEM KRAFTSTOFF VERSORGT WIRD, WELCHER EIN ADDITIV AUFWEIST, WELCHES IN DER LAGE IST, DIE VERBRENNUNGSTEMPERATUR DER VON DEM PARTIKELFILTER ZURÜCKGEHALTENEN RUSSPARTIKEL ZU SENKEN, UND WELCHES IM WESENTLICHEN VON EINER EISENVERBINDUNG ODER IM WESENTLICHEN VON EINER CERVERBINDUNG GEBILDET WIRD, WOBEI DIESES ADDITIV IN FORM EINER ORGANISCHEN KOLLOIDALEN DISPERSION GEBILDET WIRD, IN WELCHER DIE EISENVERBINDUNG ODER DIE CERVERBINDUNG EIN OXID, EIN HYDROXID ODER EIN OXYHYDROXID VON EISEN ODER CER IST, UND DASS ALS PARTIKELFILTER, DURCH WELCHEN MAN DIE VON DER VERBRENNUNG DES KRAFTSTOFFS IN DEM MOTOR ERZEUGTEN AUSPUFFGASE STRÖMEN LÄSST, EIN KATALYSIERTER FILTER VERWENDET WIRD, DESSEN KATALYSATOR AUS EINEM KATALYSATOR ZUR HILFE DER VERBRENNUNG DER RUSSPARTIKEL BESTEHT.

**2.** VERFAHREN NACH ANSPRUCH 1, **DADURCH GEKENNZEICHNET, DASS** EINE KOLLOIDALE DISPERSION VERWENDET WIRD, WELCHE EINE ORGANISCHE PHASE; PARTIKEL EINER EISENVERBINDUNG IN AMORPHER FORM UND MINDESTENS EINE AMPHIPHILE VERBINDUNG AUFWEIST.

**3.** VERFAHREN NACH ANSPRUCH 2, **DADURCH GEKENNZEICHNET, DASS** EINE KOLLOIDALE DISPERSION VERWENDET WIRD, BEI DER MINDESTENS 85%, INSBESONDERE MINDESTENS 90% UND BESONDERS BEVORZUGT MINDESTENS 95% DER PARTIKEL PRIMÄRE PARTIKEL SIND.

**4.** VERFAHREN NACH ANSPRUCH 2, **DADURCH GEKENNZEICHNET, DASS** EINE KOLLOIDALE DISPERSION VERWENDET WIRD, DEREN PARTIKEL EINEN D50 AUFWEISEN, WELCHER ZWISCHEN 1 NM UND 5 NM, INSBESONDERE ZWISCHEN 3 NM UND 4 NM, LIEGT.

**5.** VERFAHREN NACH EINEM DER VORHERGEHENDEN ANSPRÜCHE, **DADURCH GEKENNZEICHNET, DASS** DER ANTEIL VON EISEN UND CER IN DEM ADDITIV DES KRAFTSTOFFS IN EINEM VERHÄLTNIS LIEGT, WELCHES ZWISCHEN 0/100 UND 80/20 LIEGT, WOBEI DIESES VERHÄLTNIS EIN MOLVERHÄLTNIS VON ELEMENT CE IN BEZUG AUF ELEMENT FE IST, INSBESONDERE ZWISCHEN 10/90 UND 50/50.

**6.** VERFAHREN NACH EINEM DER VORHERGEHENDEN ANSPRÜCHE, **DADURCH GEKENNZEICHNET, DASS** DER KATALYSATOR DES PARTIKELFILTERS EIN KATALYSATOR AUF BASIS VON MINDESTENS EINEM METALL IST, WELCHES AUS PLATIN ODER DEN METALLEN DER GRUPPE VON PLATIN AUSGEWÄHLT WIRD, WOBEI DAS METALL IN EINER BESCHICHTUNG (WASHCOAT), WELCHE AUF DEM FILTER ANGEORDNET IST, UND IN EINER MENGE VON HÖCHSTENS 70 G/Fuß$^3$ (2,5 G/DM$^3$) ENTHALTEN IST.

**7.** VERFAHREN NACH ANSPRUCH 6, **DADURCH GEKENNZEICHNET, DASS** DIE MENGE AN KATALYSATOR HÖCHSTENS 50 G/FUß$^3$ (1,8 G/DM$^3$) BETRÄGT.

**8.** VERFAHREN NACH EINEM DER VORHERGEHENDEN ANSPRÜCHE, **DADURCH GEKENNZEICHNET, DASS** MAN DIE AUSPUFFGASE DURCH EINEN DIESEL-OXIDATIONSKATALYSATOR STRÖMEN LÄSST, WELCHER STROMAUFWÄRTS DES PARTIKELFILTERS ANGEORDNET IST.

**9.** VERFAHREN NACH EINEM DER VORHERGEHENDEN ANSPRÜCHE, **DADURCH GEKENNZEICHNET, DASS** DER MOTOR MIT EINER AUSPUFFANLAGE AUSGERÜSTET IST, WELCHE EIN SYSTEM ZUR REDUZIERUNG DER STICKOXIDE AUFWEIST.

**Claims**

1.  Method of operating a diesel engine or a lean-burn engine equipped with an exhaust system in which a particle filter is mounted, **characterized in that** the engine is supplied with a fuel containing an additive capable of lowering the combustion temperature of the particles of soot held by the particle filter and consisting essentially of an iron compound or essentially of an iron compound and of a cerium compound, this additive being in the form of an organic colloidal dispersion in which the iron compound or the cerium compound is an oxide, a hydroxide or an oxyhydroxide of iron or of cerium, and **in that**, by way of particle filter through which the exhaust gases produced by the combustion of the fuel in the engine are passed, use is made of a catalytic filter, the catalyst of which consists of a catalyst that assists with the combustion of the particles of soot.

2.  Method according to Claim 1, **characterized in that** use is made of a colloidal dispersion which contains an organic phase; particles of an iron compound in amorphous form and at least one amphiphilic agent.

3.  Method according to Claim 2, **characterized in that** use is made of a colloidal dispersion, of which at least 85%, more particularly at least 90% and more particularly still at least 95% of the particles are primary particles.

4.  Method according to Claim 2, **characterized in that** use is made of a colloidal dispersion, of which the particles have a $d_{50}$ comprised between 1 nm and 5 nm, more particularly between 3 nm and 4 nm.

5.  Method according to one of the preceding claims, **characterized in that** the proportion of iron and of cerium in the fuel additive is comprised within a ratio ranging from 0/100 to 80/20, this ratio being a molar ratio of Ce element with respect to Fe element, more particularly between 10/90 and 50/50.

6.  Method according to one of the preceding claims, **characterized in that** the particle filter catalyst is a catalyst based on at least one metal chosen from platinum or metals of the platinum group, said metal being included in a coating (washcoat) deposited on the filter and in a quantity of at most 70 g/foot$^3$ (2.5 g/dm$^3$).

7.  Method according to Claim 6, **characterized in that** the quantity of catalyst is at most 50 g/foot$^3$ (1.8 g/dm$^3$).

8.  Method according to one of the preceding claims, **characterized in that** the exhaust gases are passed across a diesel oxidation catalytic converter positioned upstream of the particle filter.

9.  Method according to one of the preceding claims, **characterized in that** the engine is equipped with an exhaust system comprising a nitrogen oxides reduction system.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1493484 A
- WO 03053560 A1
- EP 671205 A
- WO 9719022 A
- WO 0110545 A
- WO 03053560 A